# EUROPEAN PATENT SPECIFICATION

(11) **EP 1 687 370 B1**
(45) Date de publication et mention de la délivrance du brevet: **21.05.2008**
(21) Numéro de dépôt: 04791002.1
(22) Date de dépôt: 29.10.2004
(51) Int. Cl.: C08L 7/00, C08L 21/00, C08L 15/02, C08L 23/28

(54) **BANDE DE ROULEMENT POUR PNEUMATIQUE**
LAUFFLÄCHE FÜR LUFTREIFEN
TREAD FOR PNEUMATIC TYRES

(30) Priorité: 30.10.2003 FR 0312743
(43) Date de publication de la demande: 09.08.2006
(73) Titulaire: Société de Technologie Michelin, 63000 Clermont-Ferrand (FR); Michelin Recherche et Technique S.A., 1763 Granges-Paccot (CH)
(72) Inventeur: CHASSAGNON, Robert, F-63200 Riom (FR); VASSEUR, Didier, F-63100 Clermont-Ferrand (FR)
(74) Mandataire: Ribière, Joel
(86) Numéro de dépôt international: PCT/EP2004/012237
(87) Numéro de publication internationale: WO 2005/049724

(56) Documents cités:
- EP-A- 0 527 396
- EP-A- 0 733 673
- EP-A- 1 179 560
- EP-A- 1 329 478
- WO-A-02/088238

## Description

La présente invention est relative aux bandes de roulement de pneumatiques comportant des compositions de caoutchouc renforcées par une charge inorganique.

Une bande de roulement de pneumatique doit obéir, on le sait, à un grand nombre d'exigences techniques, souvent antinomiques, parmi lesquelles une faible résistance au roulement, une résistance élevée à l'usure, ainsi qu'une adhérence élevée sur route sèche comme mouillée.

Ces compromis de propriétés, en particulier du point de vue de la résistance au roulement et de la résistance à l'usure, ont pu être améliorés ces dernières années sur les « Pneus Verts » à faible consommation d'énergie, destinés notamment aux véhicules tourisme, grâce à l'emploi de nouvelles compositions de caoutchouc faiblement hystérétiques ayant pour caractéristique d'être renforcées majoritairement de charges inorganiques spécifiques qualifiées de renforçantes, notamment des silices hautement dispersibles dites "HDS" (*Highly Dispersible Silica*), capables de rivaliser, du point de vue du pouvoir renforçant, avec les noirs de carbone conventionnels de grade pneumatique.

Ainsi, aujourd'hui, ces charges inorganiques renforçantes remplacent peu à peu les noirs de carbone dans les bandes de roulement des pneumatiques, d'autant plus qu'elles possèdent une autre vertu connue, celle d'augmenter l'adhérence des pneumatiques sur route mouillée, enneigée ou verglacée.

L'augmentation des propriétés d'adhérence des pneumatiques reste toutefois une préoccupation constante des concepteurs de pneumatiques.

Or, les Demanderesses ont découvert lors de leurs recherches que la présence combinée dans une matrice de caoutchouc renforcée d'une charge inorganique, d'un caoutchouc butyl et, à titre d'agent plastifiant, d'un triester d'acide gras de glycérol permettait d'augmenter encore, et ceci de manière notable, l'adhérence sur sol mouillé des bandes de roulement et donc des pneumatiques les comportant.

Ainsi, un premier objet de l'invention concerne une bande de roulement de pneumatique comportant au moins une composition de caoutchouc, ladite composition comprenant au moins un élastomère diénique, une charge inorganique renforçante, un agent de couplage et un agent plastifiant, caractérisée en ce que l'élastomère diénique comporte plus de 30 pce (parties en poids pour cent parties d'élastomère) de caoutchouc butyl et en ce que l'agent plastifiant comprend un triester d'acide gras insaturé (C₁₂-C₂₂) de glycérol.

L'invention a également pour objet l'utilisation d'une telle bande de roulement pour la fabrication de pneumatiques neufs ou le rechapage des pneumatiques usagés.

L'invention a également pour objet ces pneumatiques eux-mêmes lorsqu'ils comportent une bande de roulement conforme à l'invention.

Les pneumatiques de l'invention sont particulièrement destinés à équiper des véhicules à moteur de type tourisme, SUV ("*Sport Utility Vehicles*")*,* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention a aussi pour objet un procédé pour préparer une bande de roulement de pneumatique présentant une adhérence améliorée sur route mouillée ; ce procédé comporte les étapes suivantes :
- incorporer à un élastomère diénique, dans un mélangeur :
   **•** une charge inorganique renforçante ;
   **•** un agent de couplage ;
   **•** un agent plastifiant,
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
   • un système de réticulation ;
- malaxer le tout jusqu'à une température maximale inférieure à 120°C ;
- extruder ou calandrer la composition de caoutchouc ainsi obtenue, sous la forme d'une bande de roulement de pneumatique ;
et il est caractérisé en ce que l'élastomère diénique comporte plus de 30 pce de caoutchouc butyl et en ce que l'agent plastifiant comprend un triester d'acide gras insaturé (C₁₂-C₂₂) de glycérol.

L'invention ainsi que ses avantages seront aisément compris à la lumière de la description et des exemples de réalisation qui suivent.

### I. DESCRIPTION DETAILLEE DE L'INVENTION

La bande de roulement selon l'invention est formée, au moins pour sa partie superficielle destinée à entrer en contact avec la route, d'une composition de caoutchouc à base d'au moins : (i) un (au moins un) élastomère diénique ; (ii) une (au moins une) charge inorganique à titre de charge renforçante ; (iii) un (au moins un) agent de couplage assurant la liaison entre la charge inorganique renforçante et l'élastomère diénique ; (iv) un (au moins un) agent plastifiant ; elle est caractérisée en ce que l'élastomère diénique comporte plus de 30 pce de caoutchouc butyl et ce que l'agent plastifiant comporte un triester d'acide gras insaturé de glycérol.

Bien entendu, par l'expression composition "à base de", il faut entendre une composition comportant le mélange et/ou le produit de réaction *in situ* des différents constituants utilisés, certains de ces constituants de base (par exemple l'agent de couplage) étant susceptibles de, ou destinés à réagir entre eux, au moins en partie, lors des différentes phases de fabrication des bandes de roulement, en particulier au cours de leur vulcanisation (cuisson).

Sauf indication expresse différente, les pourcentages indiqués dans la présente demande sont des % en masse.

### I-1. Elastomère diénique

La bande de roulement selon l'invention a pour caractéristique essentielle de comporter, à titre d'élastomère diénique, plus de 30 pce de caoutchouc butyl. Ce caoutchouc butyl peut être utilisé seul ou en association avec un ou plusieurs autre(s) élastomère(s) diénique(s).

Par caoutchouc butyl, on entend de manière connue un copolymère d'isobutylène et d'isoprène (en abrégé IIR), ainsi que les versions halogénées, de préférence chlorées ou bromées, de ce type de copolymère. De préférence, le caoutchouc butyl est un caoutchouc butyl halogéné.

Par élastomère ou caoutchouc "diénique", doit être compris, par définition, un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés".

Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles).

A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Le caoutchouc butyl peut constituer l'intégralité (soit 100 pce) ou une fraction seulement de l'élastomère diénique pris dans sa totalité, étant entendu que cette fraction de caoutchouc butyl est toujours supérieure à 30 pce, de préférence au moins égale à 40 pce.

Lorsque l'élastomère diénique comporte un caoutchouc autre que butyl, en plus de ce dernier, on préféré alors utiliser au moins un élastomère diénique du type fortement insaturé, en particulier :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di-akyl(C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, lorsque le caoutchouc butyl est associé à un autre élastomère diénique (voire plusieurs), ce dernier est préférentiellement choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène (autres que IIR) et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Un mode de réalisation particulièrement préféré de l'invention consiste à utiliser de 40 à 80 voire 90 pce de caoutchouc butyl, le complément (de 10 ou 20 à 60 pce) étant constitué par un ou plusieurs des élastomères diéniques appartenant au groupe défini ci-dessus.

La bande de roulement conforme à l'invention est préférentiellement destinée à un pneumatique pour véhicule tourisme. Dans un tel cas, l'élastomère diénique comporte préférentiellement, en plus du caoutchouc butyl, un copolymère SBR, en particulier un SBR préparé en solution, utilisé ou non en coupage avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, et le polybutadiène possède plus de 90% de liaisons cis-1,4.

Mais l'invention s'applique également à tout autre type de pneumatique. Dans le cas d'un pneumatique pour véhicule industriel tel que Poids-lourd par exemple, on associe de préférence au caoutchouc butyl un élastomère isoprénique, c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène (autres que isobutylène-isoprène) ou un mélange de ces élastomères. Parmi les copolymères d'isoprène, on citera en particulier les copolymères d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique, l'élastomère diénique peut être aussi constitué, en tout ou partie, d'un autre élastomère fortement insaturé tel que, par exemple, un élastomère SBR.

Aux élastomères diéniques des bandes de roulement selon l'invention peuvent être associés tout type d'élastomère synthétique autre que diénique, voire des polymères autres que des élastomères, par exemple des polymères thermoplastiques.

### I-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique (pour bande de roulement) ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des oxydes de titane ou des carbures de silicium renforçants (voir par exemple demande WO 02/053634).

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m²/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. Toutefois, de manière préférentielle, ce taux de charge inorganique renforçante sera choisi supérieur à 50 pce, en particulier compris entre 60 et 140 pce, plus préférentiellement encore compris dans un domaine allant de 70 à 130 pce en particulier lorsque la bande de roulement est destinée à un pneumatique tourisme.

La charge inorganique renforçante peut être également utilisée en coupage (mélange) avec du noir de carbone, la quantité de noir pouvant varier dans de larges limites mais étant préférentiellement inférieure à la quantité de charge inorganique renforçante.

On préfère utiliser, outre la charge inorganique renforçante, du noir de carbone à un taux préférentiel compris entre 2 et 20 pce, plus préférentiellement compris dans un domaine de 5 à 15 pce. Dans les fourchettes indiquées, on bénéficie des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée sur sol mouillé, enneigé ou verglacé.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les pneumatiques. Parmi ces derniers, on peut citer les noirs de carbone renforçants des séries (grades ASTM) 100, 200 ou 300 utilisés dans les bandes de roulement de ces pneumatiques (par exemple N115, N134, N234, N326, N330, N339, N347, N375), mais encore ceux du type non-renforçants (car moins structurés) des séries plus élevées 400 à 700 (par exemple les noirs N660, N683, N772).

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 [méthode volumétrique multipoints (5 points) - gaz: azote - dégazage: 1 heure à 160°C - domaine de pression relative *p*/*po* : 0.05 à 0.17]. La surface spécifique CTAB est la surface externe déterminée selon la norme française NF T 45-007 de novembre 1987 (méthode B),

### I-3. Agent de couplage

De manière connue, en présence d'une charge inorganique renforçante, il est nécessaire d'utiliser un agent de couplage ou agent de liaison dont la fonction est d'assurer une connexion suffisante, de nature chimique et/ou physique, entre la charge inorganique (surface de ses particules) et l'élastomère diénique.

Des agents de couplage (silice/élastomère diénique), d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 et WO03/002649.

Conviennent en particulier, sans que la définition ci-après soit limitative, des silanes polysulfurés dits "symétriques" répondant à la formule générale (I) suivante:

Z - A - Sₙ - A - Z , (I)

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 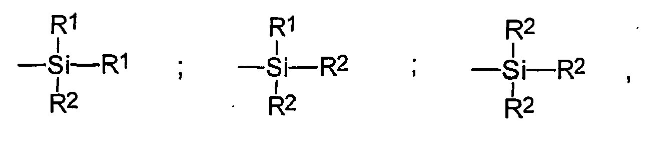
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(akoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

On citera également comme autres exemples d'agents de couplage les polysulfures (notamment disulfures, trisulfures ou tétrasulfures) de bis-(monoalkoxyl(C₁-C₄)-dialkyl(C₁-C₄)silylpropyl), plus particulièrement de bis-monoéthoxydiméthylsilylpropyl, comme par exemple le tétrasulfure décrit dans la demande de brevet WO 02/083782.

A titre d'exemples d'agents de couplage autres que les alkoxysilanes polysulfurés précités, on citera notamment des POS (polyorganosiloxanes) bifonctionnels ou encore des polysulfures d'hydroxysilane (R² = OH dans la formule I ci-dessus) tels que décrits dans les demandes WO 02/30939 et WO 02/31041.

Dans les bandes de roulement conformes à l'invention, la teneur en agent de couplage est préférentiellement comprise entre 4 et 12 pce, plus préférentiellement entre 3 et 8 pce.

L'agent de couplage pourrait être préalablement greffé sur l'élastomère diénique ou sur la charge inorganique renforçante. On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

### I-4. Agent plastifiant : triester d'acide gras de glycérol

Une seconde caractéristique essentielle de la bande de roulement selon l'invention est de comporter, à titre d'agent plastifiant, un triester de glycérol et d'acide gras insaturé en C₁₂-C₂₂ (c'est-à-dire comportant de 12 à 22 atomes de carbone).

Par triester et acide gras, on entend également un mélange de triesters ou un mélange d'acides gras, respectivement. L'acide gras est de préférence constitué majoritairement (pour plus de 50%, plus préférentiellement pour plus de 80% en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle, l'acide gras utilisé est constitué pour plus de 50% en poids, plus préférentiellement encore pour plus de 80% en poids d'acide oléique.

En d'autres termes, on utilise tout particulièrement un trioléate de glycérol, dérivé de l'acide oléique et du glycérol. Parmi les trioléates de glycérol préférentiels, on citera notamment comme exemples de composés naturels, les huiles végétales de tournesol ou de colza à fort taux d'acide oléique (plus de 50%, plus préférentiellement plus de 80% en poids).

De tels triesters à fort taux d'acide oléique sont bien connus, ils ont été décrits par exemple dans la demande WO 02/088238, à titre d'agents plastifiants dans des bandes de roulement pour pneumatiques.

Le triester de glycérol est utilisé à un taux préférentiel compris entre 5 et 80 pce, plus préférentiellement compris entre 10 et 50 pce, en particulier dans un domaine de 15 à 30 pce, notamment lorsque la bande de roulement de l'invention est destinée à un véhicule de type tourisme. A la lumière de la présente description, l'homme du métier saura ajuster ce taux d'ester en fonctions des conditions particulières de réalisation de l'invention, notamment du taux de charge inorganique utilisé.

### I-5. Additifs divers

Les compositions de caoutchouc des bandes de roulement conformes à l'invention comportent également tout ou partie des additifs usuels habituellement utilisés dans les compositions d'élastomères destinées à la fabrication de bandes de roulement, comme par exemple d'autres plastifiants (autres que le triester de glycérol) ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des résines plastifiantes notamment du type hydrocarbonées comme celles décrites dans la demande WO 02/072688, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'autre agent plastifiant préférentiel non aromatique ou très faiblement aromatique, au moins un composé choisi dans le groupe constitué par les huiles naphténiques, paraffiniques, huiles MES, huiles TDAE, les résines plastifiantes hydrocarbonées présentant une haute Tg de préférence supérieure à 30°C, et les mélanges de tels composés.

Parmi ces résines plastifiantes hydrocarbonées (on rappelle que l'appellation "résine" est réservée par définition à un composé solide), on citera notamment les résines d'homo ou copolymères d'alphapinène, betapinène, dipentène, coupe C5, par exemple de copolymère coupe C5/styrène, utilisables seules ou en combinaison avec des huiles plastifiantes comme huiles MES ou TDAE.

Ces compositions peuvent également contenir, en complément des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines, des POS hydroxylés ou hydrolysables.

### 1-6. Fabrication des bandes de roulement

Les compositions de caoutchouc des bandes de roulement de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé conforme à l'invention, pour préparer une bande de roulement de pneumatique présentant une adhérence améliorée sur route mouillée, comporte les étapes suivantes :
- incorporer à un élastomère diénique comportant plus de 30 pce de caoutchouc butyl, dans un mélangeur :
   **•** une charge inorganique renforçante ;
   **•** un agent de couplage (charge inorganique/élastomère) assurant la liaison entre la charge inorganique renforçante et l'élastomère diénique ;
   **•** un triester d'acide gras insaturé (C₁₂-C₂₂) de glycérol,
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
   **•** un système de réticulation ;
- malaxer le tout jusqu'à une température maximale inférieure à 120°C ;
- extruder ou calandrer la composition de caoutchouc ainsi obtenue, sous la forme d'une bande de roulement de pneumatique.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Une seconde étape de travail thermomécanique peut être éventuellement ajoutée, dans ce mélangeur interne, par exemple après une étape de refroidissement intermédiaire (de préférence à une température inférieure à 100°C), dans le but de faire subir aux compositions un traitement thermique complémentaire, notamment pour améliorer la dispersion, dans la matrice élastomérique, de la charge inorganique renforçante, de son agent de couplage et de l'agent plastifiant.

Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 minutes.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Dans le procédé conforme à l'invention, conformément aux indications précédentes données pour les compositions de caoutchouc, on a de préférence au moins une, plus préférentiellement l'ensemble des caractéristiques suivantes qui sont vérifiées :
- le caoutchouc butyl est un caoutchouc butyl halogéné ;
- le taux de caoutchouc butyl est d'au moins 40 pce ;
- la quantité de charge inorganique renforçante est supérieure à 50 pce ;
- la quantité d'agent de couplage est comprise entre 2 et 15 pce ;
- la température maximale de malaxage thermomécanique est comprise entre 145°C et 185°C ;
- la charge inorganique renforçante est une charge siliceuse ou alumineuse;
- l'agent de couplage au moins bifonctionnel est un organosilane ou un polyorganosiloxane;
- au caoutchouc butyl est associé un copolymère de butadiène-styrène (SBR) ou un polyisoprène (IR) ;
- l'acide gras du triester de glycérol est constitué pour plus de 50% en poids d'acide oléique.

Plus préférentiellement, dans ce procédé, on a au moins une, encore plus préférentiellement l'ensemble des caractéristiques suivantes qui sont vérifiées :
- le caoutchouc butyl est un caoutchouc butyl bromé ;
- le taux de caoutchouc butyl est compris dans un domaine de 40 à 80 pce ;
- la quantité de charge inorganique est comprise entre 60 et 140 pce, en particulier dans un domaine de 70 à 130 pce ;
- la quantité d'agent de couplage est comprise entre 4 et 12 pce, en particulier entre 3 et 8 pce ;
- la charge inorganique renforçante est de la silice ;
- l'agent de couplage est un polysulfure de bis-alkoxyl(C₁-C₄)silylpropyle ou de bis-hydroxysilylpropyle ;
- le SBR est un SBR préparé en solution et l'IR est un caoutchouc naturel (NR) ;
- l'acide gras du triester de glycérol est constitué pour plus de 80% en poids d'acide oléique.

Les compositions de caoutchouc précédemment décrites, à base de caoutchouc butyl, d'une charge inorganique renforçante, d'un agent de couplage et du triester de glycérol peuvent constituer la totalité ou une partie seulement de la bande de roulement conforme à l'invention, dans le cas d'une bande de roulement de type composite formée de plusieurs compositions de caoutchouc de formulations différentes.

L'invention concerne les bandes de roulement précédemment décrites tant à l'état cru (i.e., avant cuisson) qu'à l'état cuit (i.e., après réticulation ou vulcanisation).

### II. EXEMPLES DE REALISATION DE L'INVENTION

### II-1 Préparation des compositions de caoutchouc et bandes de roulement

On procède pour les essais qui suivent de la manière suivante: on introduit dans un mélangeur interne, rempli à 70% et dont la température initiale de cuve est d'environ 60°C, successivement la charge inorganique renforçante (silice), l'agent de couplage, l'agent plastifiant, l'élastomère diénique ainsi que les divers autres ingrédients à l'exception du système de vulcanisation. On conduit alors un travail thermomécanique (phase non-productive) en une étape, qui dure au total environ 3 à 4 minutes, jusqu'à atteindre une température maximale de "tombée" de 165°C.

On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement de pneumatiques tourisme.

### II-2. Essais en pneumatiques

Dans cet essai, on compare deux compositions à base d'élastomères diéniques SBR connus, renforcées par de la silice, et comportant ou non une fraction de caoutchouc butyl associé à un trioléate de glycérol. Leur formulation est donnée dans le tableau annexé.

La composition témoin C-1 comporte deux élastomères diéniques SBR et BR connus, elle est classiquement utilisée dans les pneus dits "verts" à faible consommation d'énergie. La composition selon l'invention C-2 comporte 50 pce de caoutchouc butyl auxquels sont associés 50 pce d'un SBR de même structure que le précédent (mais dépourvu d'huile aromatique), ainsi que le triester d'acide gras de glycérol (huile de tournesol à forte teneur en acide oléique).

La composition C-2 présente l'avantage de ne comporter aucune huile aromatique, cette dernière étant entièrement remplacée par le trioléate de glycérol auquel est ajoutée une résine plastifiante hydrocarbonée (polyalphapinène) telle que décrite dans la demande WO 02/072688 précitée.

Les compositions C-1 et C-2 sont utilisées comme bandes de roulement de pneus tourisme à carcasse radiale, notés respectivement P-1 (pneus témoins) et P-2 (pneus conformes à l'invention), de dimension 195/65 R15 (indice de vitesse H), conventionnellement fabriqués et en tous points identiques hormis les compositions de caoutchouc constitutives de leur bande de roulement. Les compositions C-1 et C-2 forment dans le cas présent l'intégralité des bandes de roulement respectives.

Tous les pneumatiques sont ensuite montés à l'avant d'un véhicule automobile (Renault modèle Laguna - pression avant et arrière de 2,0 bar) équipé d'un système de freinage ABS, pour être soumis à un test de freinage sur route mouillée consistant à mesurer la distance nécessaire pour passer de 50 km/h à 10 km/h lors d'un freinage brutal sur un sol arrosé (béton bitumineux).

Dans les conditions ci-dessus, on a constaté, de manière inattendue, que la distance de freinage était réduite de 26%, soit de manière tout à fait significative, pour le véhicule équipé des pneus P-2 selon l'invention, comparativement au véhicule roulant sur les pneus témoins P-1.

**Tableau**

| Composition N°: | C-1 | C-2 |
|---|---|---|
| SBR (1) | 70 | - |
| BR (2) | 30 | - |
| SBR (3) | - | 50 |
| IIR (4) | - | 50 |
| noir de carbone (5) | 6 | 6 |
| silice (6) | 80 | 80 |
| agent de couplage (7) | 6.4 | 6.4 |
| huile aromatique (8) | 33.0 | - |
| triester d'acide gras de glycérol (9) | - | 17.0 |
| résine plastifiante (10) | - | 16.0 |
| DPG (11) | 1.5 | 1.5 |
| ZnO | 2.5 | 2.5 |
| acide stéarique | 2 | 2 |
| cire anti-ozone | 1.5 | 1.5 |
| antioxydant (12) | 1.9 | 1.9 |
| soufre | 1.1 | 1.1 |
| accélérateur (13) | 2.0 | 2.0 |

| | | |
|---|---|---|
| (1) SBR (exprimé en SBR sec) étendu avec 18% en poids (12.6 pce) d'huile (soit au total 82.6 pce de SBR étendu) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) SBR (SBR sec) ; 25% de styrène, 58% de motifs polybutadiène 1-2 et 23% de motifs polybutadiène 1-4 trans (Tg = -24°C) ; (4) Caoutchouc butyl bromé (BIIR - "EB2222" de la société Exxon) ; (5) noir de carbone N234 ; (6) silice "Zeosil 1165MP" de la société Rhodia, type "HDS" (BET et CTAB : environ 160 m²/g); (7) agent de couplage TESPT ("Si69" de la société Degussa) ; (8) huile aromatique totale (y compris huile d'extension du SBR(1)) ; (9) trioléate de glycérol (huile de tournesol à 85% en poids d'acide oléique - "Lubrirob Tod 1880" de la société Novance) ; (10) résine hydrocarbonée à haute Tg (polyalphapinène "R2495" de la société Hercules) ; (11) diphénylguanidine (Perkacit DPG de la société Flexsys); (12) N-1,3-diméthylbutyl-N-phénylparaphénylènediamine (Santoflex 6-PPD dé la société Flexsys); (13) CBS (Santocure de Flexsys -1,8 pce) + ZBEC (Vulkacit de Bayer - 0,2 pce). | | |

## Revendications

1. Bande de roulement de pneumatique comportant au moins une composition de caoutchouc, ladite composition comprenant au moins un élastomère diénique, une charge inorganique renforçante, un agent de couplage et un agent plastifiant, **caractérisée en ce que** l'élastomère diénique comporte plus de 30 pce de caoutchouc butyl et **en ce que** l'agent plastifiant comprend un triester d'acide gras insaturé (C₁₂-C₂₂) de glycérol.

2. Bande de roulement selon la revendication 1, le taux de caoutchouc butyl étant d'au moins 40 pce.

3. Bande de roulement selon la revendication 2, le taux de caoutchouc butyl étant compris dans un domaine de 40 à 80 pce.

4. Bande de roulement selon l'une quelconque des revendications 1 à 3, le caoutchouc butyl étant un caoutchouc butyl halogéné.

5. Bande de roulement selon la revendication 4, le caoutchouc butyl étant un caoutchouc butyl bromé.

6. Bande de roulement selon l'une quelconque des revendications 1 à 5, l'acide gras du triester de glycérol étant pour plus de 50% en poids choisi dans le groupe constitué par l'acide oléique, l'acide linoléique, l'acide linolénique et les mélanges de ces acides.

7. Bande de roulement selon la revendication 6, l'acide gras comportant plus de 50% en poids d'acide oléique.

8. Bande de roulement selon la revendication 7, l'acide gras comportant plus de 80% en poids d'acide oléique.

9. Bande de roulement selon la revendication 8, le triester d'acide gras de glycérol étant du trioléate de glycérol.

10. Bande de roulement selon la revendication 9, le trioléate de glycérol étant présent sous forme d'huile végétale de tournesol.

11. Bande de roulement selon l'une quelconque des revendications 1 à 10, le taux de triester de glycérol étant compris entre 5 et 80 pce.

12. Bande de roulement selon la revendication 11, le taux de triester de glycérol étant compris entre 10 et 50 pce.

13. Bande de roulement selon la revendication 12, le taux de triester de glycérol étant compris dans un domaine de 15 à 30 pce.

14. Bande de roulement selon l'une quelconque des revendications 1 à 13, l'élastomère diénique comportant, outre le caoutchouc butyl, au moins un élastomère choisi dans le groupe constitué par les polybutadiènes, les polyisoprènes de synthèse, le caoutchouc naturel, les copolymères de butadiène, les copolymères d'isoprène et les mélanges de ces élastomères.

15. Procédé pour préparer une bande de roulement de pneumatique présentant une adhérence améliorée sur route mouillée, **caractérisé en ce qu'**il comporte les étapes suivantes:
- incorporer à un élastomère diénique, dans un mélangeur :
**•** une charge inorganique renforçante ;
**•** un agent de couplage ;
**•** un agent plastifiant,
en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
• un système de réticulation ;
- malaxer le tout jusqu'à une température maximale inférieure à 120°C;
- extruder ou calandrer la composition de caoutchouc ainsi obtenue, sous la forme d'une bande de roulement de pneumatique ;
**caractérisé en ce que** l'élastomère diénique comporte plus de 30 pce de caoutchouc butyl et **en ce que** l'agent plastifiant comprend un triester d'acide gras insaturé (C₁₂-C₂₂) de glycérol.

16. Utilisation d'une bande de roulement conforme à l'une quelconque des revendications 1 à 14, pour la fabrication ou le rechapage de pneumatiques.

17. Pneumatique comportant une bande de roulement conforme à l'une quelconque des revendications 1 à 14.

## Claims

1. A tyre tread comprising at least a rubber composition, said composition comprising at least a diene elastomer, a reinforcing inorganic filler, a coupling agent and a plasticising agent, **characterised in that** the diene elastomer comprises more than 30 phr of butyl rubber and **in that** the plasticising agent comprises an unsaturated (C₁₂-C₂₂) fatty acid triester of glycerol.

2. A tread according to Claim 1, the amount of butyl rubber being at least 40 phr.

3. A tread according to Claim 2, the amount of butyl rubber being within a range from 40 to 80 phr.

4. A tread according to any one of Claims 1 to 3, the butyl rubber being a halogenated butyl rubber.

5. A tread according to Claim 4, the butyl rubber being a brominated butyl rubber.

6. A tread according to any one of Claims 1 to 5, the fatty acid of the glycerol triester being to more than 50% by weight selected from among the group consisting of oleic acid, linoleic acid, linolenic acid and mixtures of these acids.

7. A tread according to Claim 6, the fatty acid comprising more than 50% by weight of oleic acid.

8. A tread according to Claim 7, the fatty acid comprising more than 80% by weight of oleic acid.

9. A tread according to Claim 8, the glycerol fatty acid triester being glycerol trioleate.

10. A tread according to Claim 9, the glycerol trioleate being present in the form of sunflower oil.

11. A tread according to any one of Claims 1 to 10, the amount of glycerol triester being between 5 and 80 phr.

12. A tread according to Claim 11, the amount of glycerol triester being between 10 and 50 phr.

13. A tread according to Claim 12, the amount of glycerol triester being within a range from 15 to 30 phr.

14. A tread according to any one of Claims 1 to 13, the diene elastomer comprising, in addition to the butyl rubber, at least one elastomer selected from among the group consisting of polybutadienes, synthetic polyisoprenes, natural rubber, butadiene copolymers, isoprene copolymers and mixtures of these elastomers.

15. A process for preparing a tyre tread having improved grip on wet roads, **characterised in that** it comprises the following steps:
- incorporating in a diene elastomer, in a mixer:
• a reinforcing inorganic filler;
• a coupling agent;
• a plasticising agent,
by thermomechanically kneading the entire mixture, in one or more stages, until a maximum temperature of between 130°C and 200°C is reached;
- cooling the entire mixture to a temperature of less than 100°C;
- then incorporating:
**•** a cross-linking system;
- kneading the entire mixture until a maximum temperature of less than 120°C is reached;
- extruding or calendering the rubber composition thus obtained, in the form of a tyre tread;
**characterised in that** the diene elastomer comprises more than 30 phr of butyl rubber and **in that** the plasticising agent comprises an unsaturated (C₁₂-C₂₂) fatty acid triester of glycerol.

16. The use of a tread according to any one of Claims 1 to 14, for the manufacture or retreading of tyres.

17. A tyre comprising a tread according to any one of Claims 1 to 14.

## Patentansprüche

1. Luftreifenlauffläche, die mindestens eine Kautschukzusammensetzung umfasst, wobei diese Zusammensetzung mindestens ein Dien-Elastomer, einen verstärkenden anorganischen Füllstoff, ein Kopplungsmittel und einen Weichmacher umfasst, **dadurch gekennzeichnet, dass** das Dien-Elastomer mehr als 30 Teile Butylkautschuk umfasst und dass der Weichmacher einen ungesättigten (C₁₂-C₂₂) -Glycerintrifettsäureester umfasst.

2. Lauffläche nach Anspruch 1, wobei der Gehalt an Butylkautschuk mindestens 40 Teile ausmacht.

3. Lauffläche nach Anspruch 2, wobei der Gehalt an Butylkautschuk in einem Bereich von 40 bis 80 Teilen liegt.

4. Lauffläche nach einem der Ansprüche 1 bis 3, wobei es sich bei dem Butylkautschuk um einen Halobutylkautschuk handelt.

5. Lauffläche nach Anspruch 4, wobei es sich bei dem Butylkautschuk um einen Brombutylkautschuk handelt.

6. Lauffläche nach einem der Ansprüche 1 bis 5, wobei die Fettsäure des Glycerintriesters zu mehr als 50 Gew.-% eine Säure ist, die aus der Gruppe bestehend aus Ölsäure, Linolsäure, Linolensäure und Gemischen dieser Säuren ausgewählt ist.

7. Lauffläche nach Anspruch 6, wobei die Fettsäure mehr als 50 Gew.-% Ölsäure umfasst.

8. Lauffläche nach Anspruch 7, wobei die Fettsäure mehr als 80 Gew.-% Ölsäure umfasst.

9. Lauffläche nach Anspruch 8, wobei es sich bei dem Glycerintrifettsäureester um Glycerintriölsäureester handelt.

10. Lauffläche nach Anspruch 9, wobei der Glycerintriölsäureester in der Form von Sonnenblumenöl vorliegt.

11. Lauffläche nach einem der Ansprüche 1 bis 10, wobei der Gehalt an Glycerintriester zwischen 5 und 80 Teilen ausmacht.

12. Lauffläche nach Anspruch 11, wobei der Gehalt an Glycerintriester zwischen 10 und 50 Teilen ausmacht.

13. Lauffläche nach Anspruch 12, wobei der Gehalt an Glycerintriester in einem Bereich von 15 bis 30 Teilen liegt.

14. Lauffläche nach einem der Ansprüche 1 bis 13, wobei das Dien-Elastomer neben dem Butylkautschuk mindestens ein Elastomer umfasst, das aus der Gruppe bestehend aus Polybutadienen, synthetischen Polyisoprenen, Naturkautschuk, Butadien-Copolymeren, Isopren-Copolymeren und Gemischen dieser Elastomere ausgewählt ist.

15. Verfahren zum Herstellen einer Luftreifenlauffläche, die eine verbesserte Haftung auf einer nassen Straße aufweist, **dadurch gekennzeichnet, dass** es die folgenden Schritte umfasst:
- Einarbeiten der folgenden Stoffe in ein Dien-Elastomer in einem Mischer:
**•** einen verstärkenden anorganischen Füllstoff;
**•** ein Kopplungsmittel;
**•** einen Weichmacher,
wobei das Ganze ein oder mehrere Male thermomechanisch geknetet wird, bis eine Höchsttemperatur zwischen 130 °C und 200 °C erzielt wird;
- Abkühlen der Masse auf eine Temperatur von weniger als 100 °C;
- anschließend Einarbeiten von:
**•** einem Vernetzungssystem;
- Mischen des Ganzen bis zu einer Höchsttemperatur von weniger als 120 °C;
- Extrudieren oder Kalandern der so erhaltenen Kautschukzusammensetzung zu der Form einer Luftreifenlauffläche;
**dadurch gekennzeichnet, dass** das Dien-Elastomer mehr als 30 Teile Butylkautschuk umfasst und dass der Weichmacher einen ungesättigten (C₁₂-C₂₂)-Glycerintrifettsäureester umfasst.

16. Verwendung einer Lauffläche nach einem der Ansprüche 1 bis 14 zur Herstellung oder Runderneuerung von Luftreifen.

17. Luftreifen, der eine Lauffläche nach einem der Ansprüche 1 bis 14 umfasst.
